(19) Europäisches Patentamt / European Patent Office / Office européen des brevets

(11) **EP 2 435 674 B1**

(12) **EUROPEAN PATENT SPECIFICATION**

(45) Date of publication and mention of the grant of the patent:
**29.03.2017 Bulletin 2017/13**

(21) Application number: **10780892.5**

(22) Date of filing: **27.05.2010**

(51) Int Cl.:
*F01N 9/00* (2006.01)      *F01N 3/20* (2006.01)

(86) International application number:
**PCT/SE2010/050572**

(87) International publication number:
**WO 2010/138071 (02.12.2010 Gazette 2010/48)**

(54) **METHOD AND SYSTEM FOR CONTROLLING THE INJECTION OF REDUCING AGENT UPSTREAM OF AN SCR CATALYST**

VERFAHREN UND SYSTEM ZUR STEUERUNG DER INJEKTION EINES REDUKTIONSMITTELS STROMAUF EINES SCR-KATALYSATORS

PROCÉDÉ ET SYSTÈME DE COMMANDE DE L'INJECTION D'UN AGENT RÉDUCTEUR EN AMONT D'UN CATALYSEUR DE SYSTÈME DE RÉDUCTION CATALYTIQUE SÉLECTIVE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 SE 0900718**

(43) Date of publication of application:
**04.04.2012 Bulletin 2012/14**

(73) Proprietor: **Scania CV AB (publ)**
**151 87 Södertälje (SE)**

(72) Inventor: **WESTERBERG, Björn**
**S-151 48 Södertälje (SE)**

(74) Representative: **Scania CV AB**
**Patents, GP 117kv**
**151 87 Södertälje (SE)**

(56) References cited:
**EP-A1- 1 706 607      EP-A1- 2 025 388**
**EP-A1- 2 025 388      WO-A1-2005/068797**
**US-A1- 2004 098 968      US-A1- 2004 098 968**

- **ERICSON C ET AL: "A State-Space Simplified SCR Catalyst Model for Real Time Applications, SAE SP 2008-01-0616", SAE WORLD CONGRESS, XX, XX, no. 2008-01-0616, 1 April 2008 (2008-04-01), pages 133-139, XP003026950,**
- **ERICSON C. ET AL: 'A State-Space Simplified SCR Catalyst Model for Real Time Applications, SAE SP 2008-01-0616' SAE WORLD CONGRESS & EXHIBITION April 2008, DETROIT, MI, USA, pages 133 - 139, XP003026950**

**EP 2 435 674 B1**

**Description**

FIELD OF THE INVENTION, AND PRIOR ART

The present invention relates to a method according to the preamble of claim 1 and a system according to the preamble of claim 5 for controlling the injection of reducing agent in the form of urea or ammonia upstream of an SCR catalyst in an exhaust line from a combustion engine. The invention relates also to a computer programme product comprising computer programme code for implementing a method according to the invention, and to an electronic control unit.

To meet prevailing exhaust cleaning requirements, today's motor vehicles are usually provided with a catalyst in the exhaust line to effect catalytic conversion of environmentally hazardous constituents of the exhaust gases to environmentally less hazardous substances. A method which has been employed for achieving effective catalytic conversion is based on injecting a reducing agent into the exhaust gases upstream of the catalyst. A reductive substance which forms part of, or is formed by, the reducing agent is carried by the exhaust gases into the catalyst, in which it is adsorbed on active seats in the catalyst, resulting in accumulation of the reductive substance in the catalyst. The accumulated reductive substance may either be desorbed, i.e. released from the active seats, or react with and thereby convert an exhaust substance to a non-hazardous substance. Such a reduction catalyst may for example be of SCR (selective catalytic reduction) type. This type of catalyst is hereinafter called SCR catalyst. An SCR catalyst selectively reduces $NO_x$ in the exhaust gases but not the sulphur in the exhaust gases. In the case of an SCR catalyst, a reducing agent in the form of urea or ammonia is usually injected into the exhaust gases upstream of the catalyst. The injection of urea into the exhaust gases results in the formation of ammonia and it is this ammonia that constitutes the reductive substance which assists the catalytic conversion in the SCR catalyst. The ammonia accumulates in the catalyst by being adsorbed on active seats in the catalyst, and $NO_x$ present in the exhaust gases is converted to nitrogen and water when it is brought into contact in the catalyst with accumulated ammonia on the active seats in the catalyst.

When using an SCR catalyst in combination with dosage of reducing agent in the form of urea or ammonia it is important to control the injection of the reducing agent so that desired conversion of the respective exhaust substance is achieved without too large amounts of unconsumed ammonia leaving the catalyst along with the exhaust gases and thereby being discharged to the environment. The consumption and cost of the reducing agent can thus be minimised while at the same time preventing or at least minimising undesirable discharges of ammonia to the environment. Ammonia is toxic and malodorous, so it is desirable as far as possible to minimise discharges of this ammonia to the environment, while at the same time maintaining sufficient injection of reducing agent, e.g. in the form of urea, to achieve required conversion of the respective exhaust substance, in this case $NO_x$. The expression "ammonia slip" is conventionally used to refer to presence of ammonia in the gases leaving an SCR catalyst.

When a catalyst of the type here concerned is used, present-day practice is that the injection of reducing agent is usually controlled by means of two-dimensional charts, each chart being related to a certain exhaust temperature. The respective charts contain values for the amount of reducing agent to be injected into the exhaust line at the prevailing load and speed of the respective combustion engine. Each chart therefore has engine load on a first axis and engine speed on a second axis. These charts are compiled empirically by plotting the respective combustion engine and catalyst on the basis of steady-state performance. Such plotting has to be done for each specific combination of combustion engine and catalyst, and this known solution also involves comprehensive test runs and settings for each specific combination of engine type and catalyst type. Any changes in, for example, the engine's emissions entail comprehensive and troublesome changes to all the values in the charts. As the charts give dosage adapted to steady-state conditions, dynamic compensations are needed when operating conditions change quickly. A further disadvantage of this known solution is that despite dynamic compensations there is the possible occurrence of operating conditions which the charts do not cover, which may lead to incorrect dosage of reducing agent.

A known practice from, for example, EP 1 706 607 A1 in a system for controlling the injection of reducing agent is to use calculated values from a computation model which, while catering for the expected reactions in the catalyst in prevailing operating conditions, continuously determines current states in the catalyst, e.g. the accumulation of ammonia in various parts of the catalyst and the conversion of $NO_x$ which takes place in various parts of the catalyst. The system according to EP 1 706 607 A1 uses the values from the computation model inter alia to determine actual values and set-point values of the accumulation of ammonia in the catalyst, and a regulator controlling the injection of reducing agent delivers a control signal which depends on the match between the prevailing actual value and the set-point value. One of the advantages of using a computation model of said type is that it need only be adapted to the catalyst and may therefore be independent of the configuration of the combustion engine connected to the catalyst. It is also possible to use a scalable computation model which is easily adaptable to the dimensions of the catalyst.

In vehicle applications, the SCR technique presents a major challenge with regard to regulating the reducing agent injection in that the flow, temperature and $NO_x$ concentration of the exhaust gases continually vary in response to varying operating conditions.

OBJECT OF THE INVENTION

The object of the present invention is to propose an advantageous further development of a method and system of the type described in EP 1 706 607 A1 and to create possibilities of effectively controlling the injection of reducing agent without exceeding the maximum permissible ammonia slip after the catalyst.

SUMMARY OF THE INVENTION

According to the invention, said object is achieved by a method having the features defined in claim 1 and a system having the features defined in claim 5.

The solution according to the invention comprises

- controlling the injection of reducing agent in the exhaust line according to the result of comparison between an accumulation current value and an accumulation set-point value, which accumulation actual value and accumulation set-point value represent respectively current and required accumulations of ammonia in the catalyst and are calculated on the basis of information from a computation model which, while catering for the expected reactions in the catalyst in prevailing operating conditions, continuously determines current states in the catalyst, e.g. the accumulation of ammonia in various parts of the catalyst and the conversion of $NO_x$ which takes place in various parts of the catalyst, to which end the computation model divides the catalyst in its longitudinal direction into a tank series with a plurality of tanks one after another and the accumulation actual value and the accumulation set-point value refer respectively to current and required accumulations of ammonia in a tank, herein called reference tank, situated one or more steps upstream of the tank which is nearest to the outlet end of the catalyst,
- calculating, on the basis of a given slip value which represents maximum permissible concentration of ammonia in the exhaust gases leaving the catalyst, and by means of information from said computation model, a reference value which represents the equilibrium accumulation of ammonia which has to be present in the tank in order to achieve the given slip value, such a reference value being calculated sequentially for each of the tanks, starting with the tank situated nearest to the outlet end of the catalyst and proceeding thereafter tank by tank upstream right up to the reference tank, and
- using the reference value determined for the reference tank as said accumulation set-point value or as a maximum permissible upper limit for this accumulation set-point value.

The reference tank being situated "one or more steps upstream of the tank which is nearest to the outlet end of the catalyst" means in this description and in the claims set out below that the reference tank is not the last tank in the computation model's tank series, i.e. not the tank in the tank series which is situated nearest to the outlet end of the catalyst. It is possible to adopt as reference tank the last but one tank in the tank series or a tank situated further upstream in the tank series. In this latter case there will therefore be one or more tanks between the reference tank and the last tank in the tank series.

The expression "equilibrium accumulation" means in this description and in the claims set out below the accumulation of ammonia which occurs as a steady state in current operating conditions with a certain level of reducing agent injection, i.e. the value towards which in prevailing operating conditions the ammonia accumulation tends upon a change in the reducing agent injection.

The solution according to the invention determines how large an equilibrium accumulation of ammonia may be allowed in the reference tank without exceeding a given slip value, i.e. without exceeding the maximum permissible concentration of ammonia in the exhaust gases leaving the catalyst. The fact that the regulation of the reducing agent injection takes this maximum permissible equilibrium accumulation into account makes it possible to ensure that the given slip value is not exceeded. The solution according to the invention allows more effective utilisation of the catalyst and injected reducing agent, making it possible to reduce reducing agent consumption and use a catalyst with reduced catalyst volume.

According to an embodiment of the invention, the tank situated nearest to the inlet end of the catalyst is adopted as reference tank. The further upstream the reference tank is situated in the catalyst, the quicker the regulation of the reducing agent injection will be, with no change in robustness. The best situation for rapid and robust regulation is therefore the reference tank being situated first in the catalyst, i.e. being the tank in the tank series which is nearest to the inlet end of the catalyst.

Other advantageous features of the method and system according to the invention are indicated by the dependent claims and the description set out below.

The invention relates also to a computer programme product having the features defined in claim 7 and an electronic control unit having the features defined in claim 9.

BRIEF DESCRIPTION OF THE DRAWINGS

The invention is described in more detail below on the basis of embodiment examples with reference to the attached drawings, in which

Fig. 1    is a schematic diagram of a combustion engine with an associated catalyst and a system according to the present invention,

Fig. 2    is a block diagram illustrating a system according to an embodiment of the invention, and

Fig. 3    is a schematic diagram of an electronic control unit for implementing a method according to the invention.

DETAILED DESCRIPTION OF EMBODIMENTS

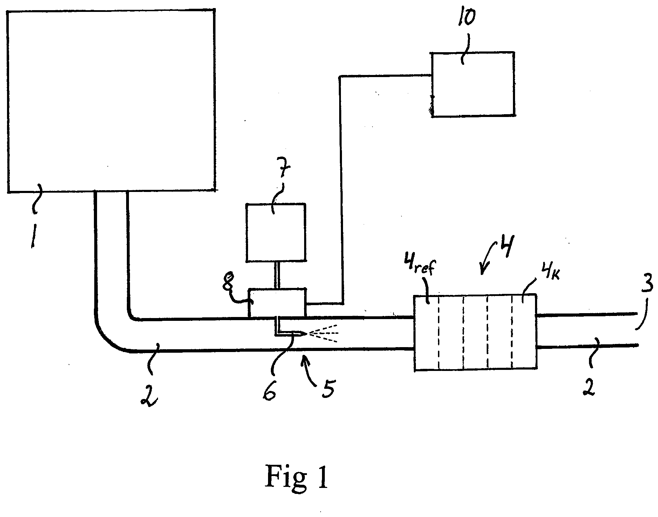

Fig. 1 depicts schematically a combustion engine 1 provided with a system 10 according to the present invention. The exhaust gases leaving the combustion engine 1 pass through an exhaust line 2 and reach the environment via an exhaust outlet 3. An SCR catalyst 4 is provided in the exhaust line 2. The exhaust gases from the combustion engine 1 are thus caused to pass through this catalyst 4 before they reach the environment via the exhaust outlet 3. There is an injection point 5 for reducing agent in the exhaust line 2 upstream of the catalyst 4. The injection of reducing agent is effected by an injection device comprising one or more injection means 6 arranged in the exhaust line in the form of injection nozzles or the like, and a storage container 7 connected thereto for reducing agent. The injection device further comprises a dosing unit 8 comprising a dosing arrangement and a regulating means, e.g. a regulating valve or the like, adapted to regulating the supply of reducing agent to said injection means 6. The dosing unit 8 is controlled by a system 10 according to the present invention which determines amounts of reducing agent to be injected into the exhaust gases.

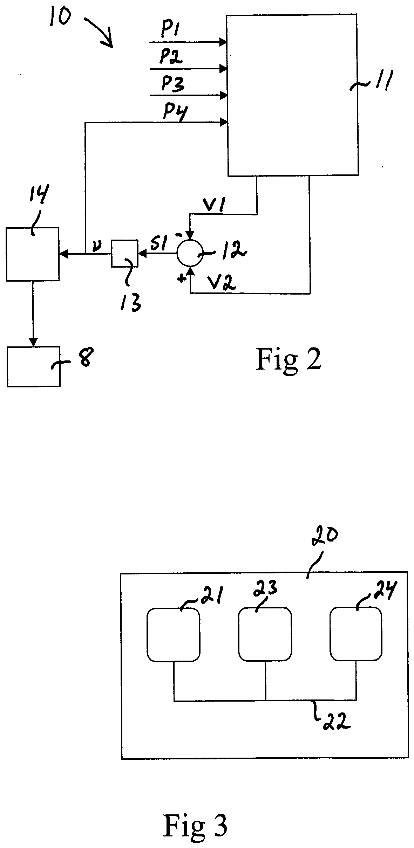

Fig. 2 illustrates schematically an embodiment of a system 10 according to the invention. The system 10 comprises an electronic calculation means 11 adapted to using a computation model to continuously determine current states in the catalyst 4 while catering for the expected reactions in the catalyst in prevailing operating conditions. The computation model takes into account the expected exothermic and endothermic reactions in the catalyst 4 in prevailing operating conditions and calculates inter alia the accumulation of ammonia in various parts of the catalyst and the conversion of $NO_x$ which takes place in various parts of the catalyst under the influence of ammonia therein accumulated. The computation model may be of any desired configuration provided that it gives with required accuracy correct values of the accumulation of ammonia and the conversion of $NO_x$ in the catalyst. The computation model divides the catalyst 4 in its longitudinal direction into a tank series with a plurality of tanks $4_k$ one after another, and the calculation means 11 is adapted to determining on the basis of information from said computation model an accumulation actual value V1 and an accumulation set-point value V2 which respectively represent current and required accumulations of ammonia in the catalyst in a tank $4_{ref}$, herein called reference tank, situated one or more steps upstream of the tank $4_K$ which is nearest to the outlet end of the catalyst.

The computation model divides the catalyst 4 into at least two tanks $4_k$, but the number of tanks $4_k$ in the computation model is with advantage five or more.

The system 10 further comprises a comparator 12 adapted to comparing said accumulation value V1 and accumulation set-point value V2. The comparator 12 is therefore adapted to receiving information from the calculation means 11 about the prevailing actual value V1 and set-point value V2. The comparator 12 is adapted to comparing the actual value V1 and the set-point value V2 and to delivering a signal S1 which depends on the match, e.g. the difference, between that actual value V1 and set-point value V2. The system 10 comprises also a regulator 13 adapted to generating, on the basis of said signal S1 from the comparator 12, a control signal $\nu$ which acts upon the injection of reducing agent. The regulator 13 takes with advantage the form of a PI regulator. In the example illustrated, the regulator 13 is adapted to delivering the control signal $\nu$ to an electronic control means 14 connected to the dosing unit 8 of the injection device and adapted to controlling this dosing unit on the basis of said control signal $\nu$ so that an amount of reducing agent appropriate to prevailing conditions is injected into the exhaust line 2.

On the basis of a given slip value $y_{SL}$ which represents maximum permissible concentration of ammonia in the exhaust gases leaving the catalyst 4, and by means of information from said computation model, the calculation means 11 is adapted to calculating sequentially for each of the tanks $4_k$, starting with the tank $4_K$ which is situated nearest to the outlet of the catalyst, and thereafter upstream tank by tank right up to the reference tank $4_{ref}$, a reference value $\theta_{L,k}$ which represents the equilibrium accumulation of ammonia which has to be present in the tank to achieve the given slip value $y_{SL}$. The calculation means 11 is adapted to allowing the reference value $\theta_{L,k}$ thus determined for the reference tank $4_{ref}$ to serve as said accumulation set-point value V2 for a maximum permissible upper limit for this accumulation set-point value V2.

The calculation means 11, the comparator 12, the regulator 13 and the control means 14 are with advantage integrated in a common computer unit which may, if considered advantageous, be implemented in the form of two or more separate units connected to one another.

Computer programme code for implementing a method according to the invention is with advantage included in a computer programme which can be read into the internal memory of a computer, e.g. the internal memory of an electronic control unit of a motor vehicle. Such a computer programme is with advantage provided via a computer programme product comprising a data storage medium which is readable by an electronic control unit and which has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

A computer programme according to an embodiment of the invention comprises computer programme code for causing the calculation means 11 of a system 10 of the type described above to

- calculate, on the basis of a given slip value $y_{SL}$ which represents maximum permissible concentration of ammonia in the exhaust gases leaving the catalyst, and by means of information from said computation model, sequentially for each of the tanks, starting with the tank situated nearest to the outlet end of the catalyst, and proceeding thereafter upstream tank by tank right up to the reference tank, a reference value $\theta_{L,k}$ which represents the equilibrium accumulation of ammonia which has to be present in the tank to achieve the given slip value $y_{SL}$, and
- allow the reference value $\theta_{L,ref}$ thus determined for the reference tank to serve as said accumulation set-point value V2 or a maximum permissible upper limit for this accumulation set-point value V2.

Fig. 3 illustrates very schematically an electronic control unit 20 comprising an execution means 21, e.g. a central processor unit (CPU), for execution of computer software. The execution means 21 communicates with a memory 23, e.g. of the RAM type, via a data bus 22. The control unit 20 comprises also data storage medium 24, e.g. in the form of a flash memory or a memory of the ROM, PROM, EPROM or EEPROM type. The execution means 21 communicates with the data storage medium 24 via the data bus 22. A computer programme comprising computer programme code for implementing a method according to the invention is stored on the data storage medium 24.

The reducing agent takes preferably the form of urea ($CO(NH_2)_2$) but may also take the form of ammonia ($NH_3$). The injection of urea into the exhaust gases results in the formation of ammonia and it is this ammonia that constitutes the reductive substance which assists the catalytic conversion in the SCR catalyst.

The aforesaid computation model is with advantage configured to use the following input values:

a) The exhaust temperature P1 upstream of the catalyst 4. This temperature may be determined by means of temperature sensors or in any of the conventional ways for calculating it.

b) The $NO_x$ concentration P2 in the exhaust gases upstream of the catalyst 4. This concentration may be determined by means of sensors but is with advantage determined in any of the conventional ways for calculating it, e.g. on the basis of the combustion engine's load, speed, injection angle, i.e. the angle of the combustion engine's crankshaft during the injection of fuel into the engine cylinder, and, where applicable, EGR (exhaust gas recirculation) content, i.e. the amount of exhaust gases led back to the engine.

c) The exhaust mass flow P3 through the catalyst 4. This exhaust mass flow may be determined by means of mass flow sensors but is with advantage determined in any of the conventional ways for calculating it, e.g. on the basis of the combustion engine's load and speed.

d) Amount P4 of reducing agent injected into the exhaust gases. This value is with advantage obtained from the control means 14 or from the regulator 13. In the example illustrated in Fig. 2, the control signal v from the regulator 13 is used as a measure of amounts of reducing agent injected.

The computation model may also use as input values the $O_2$ concentration in the exhaust gases upstream of the SCR catalyst and/or the ambient temperature. The $O_2$ concentration may be determined by means of, for example, lambda sensors but is with advantage determined in any of the conventional ways for calculating it, e.g. on the basis of the combustion engine's load, speed and, where applicable, EGR content.

A description is set out below of a computation model which may be used to determine the aforesaid reference values $\theta_{L,k}$, $\theta_{L,ref}$ in a method and system according to the present invention.

In an SCR catalyst, nitrogen oxide $NO_x$ reacts with ammonia and is reduced to nitrogen gas. $NO_x$ is the harmful exhaust substance intended to be removed from the exhaust gases, and ammonia is the reductive substance used for the purpose. Ammonia or urea (the latter converts to ammonia) is injected into the exhaust gases upstream of the SCR catalyst.

The method uses information from a catalyst model to determine the aforesaid reference values $\theta_{L,k}$, $\theta_{L,ref}$. The catalyst model is formulated in a conventional way as a tank series model with the catalyst divided in the longitudinal direction into a plurality of tanks one after another in which the active material in the channel wall of each tank is divided into layers. The catalyst model comprises the following reactions:

$$Urea + H_2O \rightarrow 2NH_3 + CO_2 \qquad (1)$$

$$S + NH_3 \rightarrow S\text{-}NH_3 \qquad (2)$$

$$S\text{-}NH_3 \rightarrow S + NH_3 \qquad (3)$$

$$4S\text{-}NH_3 + 4NO + O_2 \rightarrow 4S + 6H_2O + 4N_2 \qquad (4)$$

$$4S\text{-}NH_3 + 5O_2 \rightarrow 4S + 6H_2O + 4NO \qquad (5)$$

The model comprises urea decomposition (reaction (1)) from dosage point to the catalyst. The model applies the simplification of regarding the isocyanic acid (HNCO) formed by decomposition of urea as equivalent to ammonia.
The urea decomposition is regarded as a homogeneous reaction with the reaction rate

$$r_{u,k} = k_{u,k} \cdot c_{tot,k} \cdot y_{Urea,k,0} \qquad (6)$$

Other reactions are catalytic. The reaction rate for adsorption of ammonia in tank k and layer n is expressed as

$$r_{a,k,n} = k_{a,k} \cdot c_{tot,k} \cdot y_{NH_3,k,n} \cdot \left(1 - \theta_{k,n}\right) \qquad (7)$$

The reaction rate for desorption of ammonia in tank k and layer n is expressed as

$$r_{d,k,n} = k_{d,k} \cdot \theta_{k,n} \qquad (8)$$

The reaction rate for $NO_x$ reduction in tank k and layer n is expressed as

$$r_{r,k,n} = k_{r,k} \cdot c_{tot,k} \cdot y_{NO_x,k,n} \cdot \theta_{k,n} \qquad (9)$$

The reaction rate for ammonia oxidation in tank k and layer n is expressed as

$$r_{o,k,n} = k_{o,k} \cdot c_{tot,k} \cdot \theta_{k,n} \qquad (10)$$

The rate constant for both homogeneous and catalytic reactions is determined from the Arrhenius equation as

$$k_{i,k} = k_{0,i} \cdot e^{-\frac{E_{A,i}}{R \cdot T_{s,k}}} \qquad (11)$$

The total gas concentration is determined from the general gas law

$$c_{tot,k} = \frac{P_k}{R \cdot T_{s,k}} \qquad (12)$$

The total pressure $P_k$ may be added to the pressure after the catalyst, which is equal to atmospheric pressure if the catalyst is positioned last in the exhaust system. For a more accurate value, the pressure drop from the respective tank to the end of the catalyst is calculated from formulae for lamina flow in a channel and is added to the pressure after the catalyst. If the catalyst is not last in the system, the pressure may be measured or calculated from pressure drops across the unit or units situated after the catalyst.

For the catalyst, the following material balance for the gas flow may be set up for substance i

$$F \cdot \left( y_{i,k-1,0} - y_{i,k,0} \right) - \Gamma_{i,k,0} \cdot \left( y_{i,k,0} - y_{i,k,1} \right) + \sum_i v_{i,j} \cdot r_{h,j,k} \cdot V_k = 0 \qquad (13)$$

The following material balance may be set up for the gas phase in layer n for substance i (disregarding homogeneous reactions):

$$\Gamma_{i,k,n-1} \cdot \left( y_{i,k,n-1} - y_{i,k,n} \right) - \Gamma_{i,k,n} \cdot \left( y_{i,k,n} - y_{i,k,n+1} \right) + \sum_i v_{i,j} \cdot r_{c,j,k,n} \cdot w_{k,n} = 0 \qquad (14)$$

For the innermost layer the second term drops out as follows:

$$\Gamma_{i,k,N-1} \cdot \left( y_{i,k,N-1} - y_{i,k,N} \right) + \sum_i v_{i,j} \cdot r_{c,j,k,N} \cdot w_{k,N} = 0 \qquad (15)$$

The material balances for the gas flow and for the gas phase in the active layers constitute an equation system from which mole fractions for the various substances in the gas flow and in the gas phase in the active layers are determined.

The mass transport coefficient for transport between the gas flow and the first layer is determined as

$$\Gamma_{i,k,0} = \frac{A_{ch,k} \cdot c_{tot,k}}{\dfrac{1}{k_{c,i,k}} + \dfrac{0.5 \cdot \Delta x_1}{D_{eff,i,k}}} \qquad (16)$$

The mass transport coefficient for transport between layers is determined as

$$\Gamma_{i,k,n} = \frac{2 \cdot D_{eff,i,k} \cdot A_{ch,k} \cdot c_{tot,k}}{\Delta x_n + \Delta x_{n+1}} \qquad (17)$$

The film transport coefficient is determined as

$$k_{c,i,k} = \frac{Sh \cdot D_{i,k}}{d} \qquad (18)$$

For the Sherwood number *Sh,* asymptotic values for the respective channel geometry may be used. The ordinary diffusivity is determined as

$$D_{i,k} = D_{ref,i} \cdot \left[ \frac{T_{s,k}}{T_{ref}} \right]^{1.75} \qquad (19)$$

The Knudsen diffusivity is determined as

$$D_{K,i,k} = \frac{d_p}{3} \cdot \sqrt{\frac{8 \cdot R \cdot T_{s,k}}{\pi \cdot M_i}} \qquad (20)$$

The effective diffusivity is determined as

$$D_{eff,i,k} = \frac{f_D}{\dfrac{1}{D_{i,k}} + \dfrac{1}{D_{K,i,k}}} \qquad (21)$$

The time-dependent material balance for adsorbed ammonia gives the time derivative for degree of coverage as

$$\frac{d\theta_{k,n}}{dt} = \frac{1}{N_c} \cdot \sum_j v_{S-NH_3,j} \cdot r_{c,j,k,n} \cdot w_{k,n} \qquad (22)$$

The degree of coverage at each time is thereafter integrated on the basis of the time derivative. The temperature of the gas flow through the catalyst is determined by solving a heat balance which takes into account the heat transferred to the solid material and the reaction heat for homogeneous reactions. The effect from the reaction heat for homogeneous reactions is determined as

$$Q_{h,k} = \sum_i r_{h,k} V_k \left( -\Delta H_{h,j} \right) \qquad (23)$$

The heat balance for the gas flow is thereafter solved by

$$T_{g,k} = \frac{F_{tot} \cdot c_{p,g} \cdot T_{g,k-1} + h_k \cdot A_{ch,k} \cdot T_{s,k} + Q_{h,k}}{F_{tot} \cdot c_{p,g} + h_k \cdot A_{ch,k}} \qquad (24)$$

in which the transfer coefficient for heat is determined as

$$h_k = \frac{Nu \cdot \lambda_g}{d} \qquad (25)$$

For the Nusselt number *Nu,* asymptotic values for the respective channel geometry may be used. The effect from the reaction heat for catalytic reactions is determined as

$$Q_{c,k} = \sum \sum_i r_{c,j,k,n} \cdot w_{k,n} \cdot (-\Delta H_{c,j}) \qquad (26)$$

The time-dependent heat balance for the solid material in the catalyst gives the time derivative for temperature as

$$\frac{dT_{s,k}}{dt} = \frac{1}{m_{s,k} \cdot c_{p,s}} \left( h_k \cdot A_{ch,k} \cdot (T_{g,k} - T_{s,k}) + Q_{c,k} \right) \qquad (27)$$

The temperature at each time is thereafter integrated on the basis of the time derivative. The derivation of maximum permissible accumulation of ammonia entails using the total degree of urea conversion, which is determined from current mole fractions in the catalyst model as

$$x_{tot,Urea,k} = \begin{cases} 1 & y_{dos} = 0 \\ 1 - \dfrac{y_{Urea,k}}{y_{dos}} & y_{dos} > 0 \end{cases} \tag{28}$$

Maximum permissible accumulation of ammonia is determined by static material balances for the gas flow and for the gas phase in the outermost layer. The influence from reactions in other layers is catered for by using an effectiveness factor for internal mass transport, which is determined from the reaction rate for $NO_x$ reduction as

$$\eta_{p,k} = \frac{\sum_{n=1}^{N} r_{c,r,k,n} \cdot w_{k,n}}{r_{c,r,k,1} \cdot \sum_{n=1}^{N} w_{k,n}} = \frac{\sum_{n=1}^{N} y_{NO_x,k,n} \cdot \theta_{k,n} \cdot w_{k,n}}{y_{NO_x,k,1} \cdot \theta_{k,1} \cdot \sum_{n=1}^{N} w_{k,n}} \tag{29}$$

The effectiveness factor for internal mass transport depends primarily on temperature and may therefore be determined beforehand and set out in chart form or equation form as a function of temperature. The derivation also uses an effectiveness factor for external mass transport which is defined as

$$\eta_{i,k} = \frac{y_{i,k,1}}{y_{i,k,0}} \tag{30}$$

A simplification used is the approximation of regarding the effectiveness factor for external mass transport as the same for $NO_x$ and for ammonia:

$$\eta_k \approx \eta_{NO_x,k} \approx \eta_{NH_3,k} \tag{31}$$

The derivation of maximum permissible accumulation of ammonia involves using only mole fractions for the gas flow, so the index n is supposed to be zero and is omitted. For mole fractions in the outermost layer, the product of the mole fraction in the gas flow and the effectiveness factor for external transport is used. The solution of the optimisation problem is done by a series of calculations which begin with the last tank in the catalyst, i.e. the tank $4_K$ which is nearest to the outlet end of the catalyst, and these calculations are repeated for each next tank upstream until they have been performed for all the tanks right up to the reference tank $4_{ref}$. The first step is to determine maximum permissible mole fraction of ammonia in the last tank, which is equal to maximum permissible mole fraction of ammonia $y_{SL}$ after the catalyst:

$$y_{L,NH_3,K} = y_{SL} \tag{32}$$

Thereafter a number of temporary variables are determined as follows:

$$Ay_K = k_{a,K} \cdot c_{tot,K} \cdot y_{L,NH_3,K} \tag{33}$$

$$By_K = -v_r \cdot k_{r,K} \cdot c_{tot,K} \cdot y_{NO_x,K} \tag{34}$$

$$C_K = -v_r \cdot k_{r,K} \cdot c_{tot,K} \cdot \eta_{p,K} \cdot \sum_{n=1}^{N} w_{K,n} \qquad (35)$$

The expression for maximum permissible degree of coverage from the material balance for $NO_x$ in the outermost layer and from the material balance for adsorbed ammonia at equilibrium (time derivative zero) gives a second-degree equation with respect to the effectiveness factor for external mass transport in which only the positive solution is physically possible:

$$\eta_{L,K} = -\frac{Q_1}{2 \cdot Q_2} + \sqrt{\left(\frac{Q_1}{2 \cdot Q_2}\right)^2 - \frac{Q_0}{Q_2}} \qquad (36)$$

in which the coefficients in the second-degree equation are defined as:

$$Q_0 = -\Gamma_{NO_x,K,0} \cdot k_{d,K} \qquad (16)$$

$$Q_1 = \Gamma_{NO_x,K,0} \cdot \left(k_{d,K} - By_K - Ay_K\right) \qquad (38)$$

$$Q_2 = Ay_K \cdot C_K + \Gamma_{NO_x,K,0} \cdot \left(By_K + Ay_K\right) \qquad (39)$$

The effectiveness factor is thereafter put into either of the expressions for maximum permissible degree of coverage as follows:

$$\theta_{L,K} = \frac{\Gamma_{NO_x,K,0} \cdot \left(1 - \eta_{L,K}\right)}{C_K \cdot \eta_{L,K}} \qquad (40)$$

$$\theta_{L,K} = \frac{Ay_K \cdot \eta_{L,K}}{Ay_K \cdot \eta_{L,K} + k_{d,K} + By_K \cdot \eta_{L,K}} \qquad (41)$$

Maximum permissible degree of $NO_x$ conversion in the last tank $4_K$ is thereafter determined as

$$x_{L,NO_x,K} = \frac{C_K \cdot \theta_{L,K} \cdot \eta_{L,K}}{F + C_K \cdot \theta_{L,K} \cdot \eta_{L,K}} \qquad (42)$$

The limit value for mole fraction of $NO_x$ at maximum permissible degree of conversion is then determined for the last tank $4_K$ as

$$y_{L,NO_x,K} = y_{NO_x,0} \cdot \prod_{p=1}^{K} \left(1 - x_{L,NO_x,p}\right) \qquad (43)$$

in which the maximum permissible degree of conversion for tanks 1 to K-1 has been set to current degree of conversion as follows:

$$x_{L,NO_x,k} = x_{NO_x,k} = 1 - \frac{y_{NO_x,k}}{y_{NO_x,k-1}} \qquad (44)$$

The calculations for the other tanks upstream of the last tank $4_K$ are done successively tank by tank in accordance with the calculations described below. A material balance for urea between the dosage point and the last tank $4_K$ determines the dosage needed to achieve the limit value for mole fraction of $NO_x$ and a mole fraction of ammonia in the last tank equal to the maximum permissible:

$$y_{L,dos} = \frac{1}{2 \cdot x_{tot,Urea,K}} \cdot \left( y_{NOx,0} - y_{L,NOx,K} + y_{SL} \right) \qquad (45)$$

Maximum permissible mole fraction of urea in the last tank $4_K$ is determined as:

$$y_{L,Urea,K} = y_{L,dos} \cdot \left( 1 - x_{tot,Urea,K} \right) \qquad (46)$$

Maximum permissible mole fraction of urea in the respective tank $4_k$ is determined as

$$y_{L,Urea,k} = y_{L,dos} \cdot \left( 1 - x_{tot,Urea,k} \right) \qquad (47)$$

Maximum permissible mole fraction of reducing agent is determined from reduced $NO_x$ from the respective tank $4_k$ up to and including the last tank $4_K$, plus maximum permissible reducing agent leaving the last tank, as

$$y_{L,Red,k} = y_{NOx,k} - y_{L,NOx,K} + 2 \cdot y_{L,Urea,K} + y_{SL} \qquad (48)$$

Maximum permissible mole fraction of ammonia is thereafter determined as the difference between maximum permissible mole fraction of reducing agent and maximum permissible mole fraction of urea with the limitation that the value may not be less than maximum permissible ammonia after the catalyst

$$y_{L,NH_3,k} = max\left( \left| y_{L,Red,k} - 2 \cdot y_{L,Urea,k} \quad y_{SL} \right| \right) \qquad (49)$$

Temporary variables are determined as follows:

$$Ay_k = k_{a,k} \cdot c_{tot,k} \cdot y_{L,NH_3,k} \qquad (50)$$

$$By_k = -v_r \cdot k_{r,k} \cdot c_{tot,k} \cdot y_{NO_x,k} \qquad (51)$$

$$C_k = -v_r \cdot k_{r,k} \cdot c_{tot,k} \cdot \eta_{p,k} \cdot \sum_{n=1}^{N} w_{k,n} \qquad (52)$$

Coefficients for the second-degree equation are determined as

$$Q_0 = -\Gamma_{NO_x,k,0} \cdot k_{d,k} \qquad (53)$$

$$Q_1 = \Gamma_{NO_x,k,0} \cdot \left(k_{d,k} - By_k - Ay_k\right) \qquad (54)$$

$$Q_2 = Ay_k \cdot C_k + \Gamma_{NO_x,k,0} \cdot \left(By_k + Ay_k\right) \qquad (55)$$

The positive solution of the second-degree equation gives the effectiveness factor for external mass transport as:

$$\eta_{L,k} = -\frac{Q_1}{2 \cdot Q_2} + \sqrt{\left(\frac{Q_1}{2 \cdot Q_2}\right)^2 - \frac{Q_0}{Q_2}} \qquad (56)$$

Maximum permissible degree of coverage in tank k is thereafter determined from either of the expressions:

$$\theta_{L,k} = \frac{\Gamma_{NO_x,k,0} \cdot \left(1 - \eta_{L,k}\right)}{C_k \cdot \eta_{L,k}} \qquad (57)$$

$$\theta_{L,k} = \frac{Ay_k \cdot \eta_{L,k}}{Ay_k \cdot \eta_{L,k} + k_{d,k} + By_k \cdot \eta_{L,k}} \qquad (58)$$

The maximum permissible degree of coverage $\theta_{L,k}$ in tank k constitutes the equilibrium accumulation of ammonia which has to be present in tank k in order to achieve the given slip value $y_{SL}$. This degree of coverage $\theta_{L,k}$ therefore serves as the aforesaid reference value for tank k.

Maximum permissible degree of $NO_x$ conversion in tank k is thereafter determined as:

$$x_{L,NO_x,k} = \frac{C_k \cdot \theta_{L,k} \cdot \eta_{L,k}}{F + C_k \cdot \theta_{L,k} \cdot \eta_{L,k}} \qquad (59)$$

The limit value for mole fraction of $NO_x$ at maximum permissible degree of coverage is then determined for the last tank $4_K$ as

$$y_{L,NO_x,K} = y_{NO_x,0} \cdot \prod_{p=1}^{K} \left(1 - x_{L,NO_x,p}\right) \qquad (60)$$

When the calculation has been done for all the tanks, from the last tank $4_K$ right up to the reference tank $4_{ref}$, the values for maximum permissible degree of coverage $\theta_{L,k}$, maximum permissible mole faction of ammonia and limit value for mole fractions of $NO_x$ have been determined for required tanks in the catalyst.

The solution according to the invention might also be applied to regulation in the form of so-called cascade regulation, e.g. of the type described in EP 1 706 607 A1, with an inner regulating circuit comprising a first regulator and an outer regulator circuit comprising a second regulator. In that case the reference value $\theta_{L,ref}$ for the reference tank $4_{ref}$ is used in the inner regulating circuit as upper limit for the set-point value. The outer regulating circuit in that case acts via its control signal upon the set-point value for the inner regulating circuit according to the match between an emission set-point value and an emission actual value for $NO_x$.

The variables and indices used in the formulae set out above have the following meanings:

| Variable | Meaning |
| --- | --- |
| A | Area |
| Ay | Temporary variable |
| By | Temporary variable |
| D | Diffusivity |
| E | Activation energy |
| F | Exhaust mole flow |
| M | Mole mass |
| Nu | Nusselt number |
| P | Total pressure |
| Q | Effect / temporary variable |
| R | General gas constant |
| S | Active seat |
| Sh | Sherwood number |
| T | Temperature |
| V | Gas volume in catalyst channel |
| c | Concentration / specific heat |
| d | Channel size |
| h | Heat transfer coefficient |
| k | Rate constant / pre-exponent / mass transfer coefficient |
| m | Mass of catalyst |
| r | Reaction rate |
| t | Time |
| y | Mole fraction |
| w | Mass of active material |
| x | Degree of conversion |
| r | Mass transport coefficient |
| $\Delta H$ | Reaction enthalpy |
| $\Delta X$ | Layer thickness |
| $\eta$ | Effectiveness factor |
| $\lambda$ | Thermal conductivity |
| $\nu$ | Stoichiometric coefficient / stoichiometric ratio |
| $\theta$ | Degree of coverage (dimensionless accumulation) |

| Index | Meaning |
| --- | --- |
| K | Number of tanks / last tank |
| L | Maximum permissible / Limit value |
| N | Number of layers / innermost layer / number of active seats |
| Red | Reducing agent |
| SL | Slip limit |
| A | Adsorption |
| C | Catalytic / mass transfer |
| ch | Channel |
| d | Desorption |
| dos | Dosage |
| eff | Effective |
| g | Gas phase |
| h | Homogeneous |
| i | Substance i |

(continued)

| Index | Meaning |
|-------|---------|
| j | Reaction j |
| k | Tank k |
| n | Layer n |
| o | Ammonia oxidation |
| p | Pore / product index |
| r | $NO_x$ reduction |
| ref | Reference |
| s | Surface |
| tot | Total |
| u | Urea decomposition |

As will be appreciated by a specialist within the field, the calculation method set out above may be modified in many different ways and it is also possible to use some other type of calculation method than that set out above for calculating the aforesaid reference values with utilisation of the basic idea here presented. A change which may be made is to use only one layer of active material, in which case the same derivation as above may be used by setting transport terms between the first and second layers to zero and setting the effectiveness factor for internal mass transport to one. Another change which may be made is to add reactions for $NO_2$ in order to be able to cater for a possible oxidation catalyst upstream of the SCR catalyst. A further change which may be made is to add a slip catalyst downstream of the SCR catalyst. The model may be expanded by the reactions which take place in the slip catalyst, and the ability of the slip catalyst to oxidise ammonia may then be taken into account in the calculation method for determining the aforesaid reference values.

The invention is of course likewise not limited in other respects to the embodiments described above, since many possibilities for modification thereof are likely to be obvious to a specialist in the field without thereby having to deviate from the basic concept of the invention as defined in the attached claims. The exhaust system may for example comprise a hydrolysis catalyst upstream of the SCR catalyst 4 and/or a particle filter upstream or downstream of, and connected in series with, the SCR catalyst 4.

**Claims**

1.  A method for controlling the injection of reducing agent in the form of urea or ammonia upstream of an SCR catalyst (4) in an exhaust line (2) from a combustion engine (1), such that the injection of reducing agent in the exhaust line is controlled according to the result of comparison between an accumulation actual value (V1) and an accumulation set-point value (V2), which accumulation actual value (V1) and accumulation set-point value (V2) represent respectively current and required accumulations of ammonia in the catalyst (4) and are calculated on the basis of information from a computation model which, while catering for the expected reactions in the catalyst in prevailing operating conditions, continuously determines current states in the catalyst, e.g. the accumulation of ammonia in various parts of the catalyst and the conversion of $NO_x$ which takes place in various parts of the catalyst, to which end the computation model divides the catalyst (4) in its longitudinal direction into a tank series with a plurality of tanks one after another and the accumulation actual value (V1) and the accumulation set-point value (V2) refer respectively to current and required accumulations of ammonia in a tank ($4_{ref}$), herein called reference tank, situated one or more steps upstream of the tank ($4_K$) which is nearest to the outlet end of the catalyst,
    **characterised**

    - **by** calculating, on the basis of a given slip value ($y_{SL}$) which represents maximum permissible concentration of ammonia in the exhaust gases leaving the catalyst (4), and by means of information from said computation model, a reference value ($\theta_{L,k}$) which represents the equilibrium accumulation of ammonia which has to be present in the tank in order to achieve the given slip value ($y_{SL}$), such a reference value ($\theta_{L,k}$) being calculated sequentially for each of the tanks, starting with the tank ($4_K$) situated nearest to the outlet end of the catalyst and proceeding thereafter tank by tank upstream right up to the reference tank ($4_{ref}$), and
    - **by** using the reference value ($\theta_{L,ref}$) determined for the reference tank ($4_{ref}$) as said accumulation set-point value (V2) or as a maximum permissible upper limit for this accumulation set-point value (V2).

2.  A method according to claim 1, **characterised**

- **in that** the accumulation actual value (V1) and the accumulation set-point value (V2) are supplied to a comparator (12) which delivers to a regulator (13), preferably in the form of a PI regulator, a signal (S1) which depends on the match between the accumulation actual value (V1) and the accumulation set-point value (V2), and

- that the regulator (13) responds to the signal (S1) from the comparator (12) by delivering a control signal (v), the injection of reducing agent in the exhaust line being controlled according to this control signal (v).

**3.** A method according to claim 1 or 2, **characterised in that** the tank situated nearest to the inlet end of the catalyst is adopted as reference tank ($4_{ref}$).

**4.** A method according to any one of claims 1-3, **characterised in that** at least the following input values are used in the computation model in generating information for determination of said reference value ($\theta_{L,k}$):

- the exhaust temperature (P1) upstream of the catalyst,
- the $NO_x$ concentration (P2) in the exhaust gases upstream of the catalyst,
- the exhaust mass flow (P3) through the catalyst, and
- injected amounts (P4) of reducing agent.

**5.** A system for controlling the injection of reducing agent in the form of urea or ammonia upstream of an SCR catalyst in an exhaust line from a combustion engine, which system (10) comprises

- an electronic calculation means (11) adapted to using a computation model to continuously determine current states in the catalyst while taking into the account the expected reactions in the catalyst in prevailing operating conditions, to which end the computation model divides the catalyst in its longitudinal direction into a tank series with a plurality of tanks one after another, and the calculation means (11) is adapted to determining on the basis of information from said computation model an accumulation actual value (V1) and an accumulation set-point value (V2) which respectively represent current and required accumulations of ammonia in the catalyst in a tank, herein called reference tank, situated one or more steps upstream of the tank which is nearest to the outlet end of the catalyst,
- a comparator (12) adapted to comparing the accumulation actual value (V1) and the accumulation set-point value (V2) and to generating a signal (S1) which represents the match between them, and
- a regulator (13) adapted to generating, on the basis of said signal (S1) from the comparator (12), a control signal (v) which acts upon the injection of reducing agent,

**characterised in that** said computation model (11) is adapted to

- calculating, on the basis of a given slip value ($y_{SL}$) which represents maximum permissible concentration of ammonia in the exhaust gases leaving the catalyst, and by means of information from said computation model, sequentially for each of the tanks, starting with the tank situated nearest to the outlet of the catalyst, and proceeding thereafter upstream tank by tank right up to the reference tank, a reference value ($\theta_{L,k}$) which represents the equilibrium accumulation of ammonia which has to be present in the tank to achieve the given slip value ($y_{SL}$), and
- allowing the reference value ($\theta_{L,ref}$) determined for the reference tank to serve as said accumulation set-point value (V2) or a maximum permissible upper limit for this accumulation set-point value (V2).

**6.** A system according to claim 5, **characterised in that** said calculation means (11) is adapted to allowing the tank situated nearest to the inlet end of the catalyst to constitute said reference tank.

**7.** A computer programme product comprising computer programme code for causing a system which is configured for controlling the injection of reducing agent in the form of urea or ammonia upstream of a catalyst in an exhaust line from a combustion engine and which comprises

▪ an electronic calculation means adapted to using a computation model to continuously determine current states in the catalyst while taking into the account the expected reactions in the catalyst in prevailing operating conditions, to which end the computation model divides the catalyst in its longitudinal direction into a tank series with a plurality of tanks one after another, and the calculation means is adapted to determining on the basis of information from said computation model an accumulation actual value (V1) and an accumulation set-point value (V2) which respectively represent current and required accumulations of ammonia in the catalyst in a tank, herein called reference tank, situated one or more steps upstream of the tank which is nearest to the outlet end of the catalyst,
- a comparator adapted to comparing the accumulation actual value (V1) and the accumulation set-point value (V2) and to generating a signal (S1) which represents the match between them, and
- a regulator adapted to generating, on the basis of said signal (S1) from the comparator, a control signal (v) which acts upon the injection of reducing agent,

to cause said computation model to

- calculate, on the basis of a given slip value ($y_{SL}$) which represents maximum permissible concentration of ammonia in the exhaust gases leaving the catalyst, and using information from said computation model, sequentially for the respective tanks, starting with the tank situated nearest to the outlet of the catalyst, and proceeding thereafter upstream tank by tank right up to the reference, a reference value ($\theta_{L,k}$) which represents the equilibrium accumulation of ammonia which has to be present in the tank to achieve the given slip value ($y_{SL}$), and
- allow the reference value ($\theta_{L,ref}$) thus determined for the reference tank to serve as said accumulation set-point value (V2) or a maximum permissible upper limit for this accumulation set-point value (V2).

8. A computer programme product according to claim 7, **characterised** in that the computer programme product comprises a data storage medium which is readable by an electronic control unit, said computer programme code being stored on the data storage medium.

9. An electronic control unit for a motor vehicle, comprising an execution means (21), a memory (23) connected to the execution means and a data storage medium (24) connected to the execution means, the computer programme code of a computer programme product according to claim 7 being stored on said data storage medium (24).

**Patentansprüche**

1. Verfahren zum Steuern der Einspritzung eines Reduktionsmittels in Form von Harnstoff oder Ammoniak stromaufwärts eines SCR-Katalysators (4) in eine Abgasleitung (2) von einem Verbrennungsmotor (1), derart, dass die Einspritzung des Reduktionsmittels in die Abgasleitung gemäß dem Ergebnis des Vergleichs zwischen einem Akkumulations-Istwert (V1) und einem Akkumulations-Sollwert (V2) gesteuert wird, wobei der Akkumulations-Istwert (V1) und der Akkumulations-Sollwert (V2) aktuelle beziehungsweise erforderliche Akkumulationen von Ammoniak in dem Katalysator (4) darstellen und basierend auf Informationen von einem Berechnungsmodell berechnet werden, welches, während für die erwarteten Reaktionen in dem Katalysator in den vorherrschenden Bedingungen gesorgt wird, kontinuierlich aktuelle Zustände in dem Katalysator bestimmt, z.B. die Akkumulation von Ammoniak in verschieden Teilen des Katalysators und die Umwandlung von $NO_x$, die in verschiedenen Teilen des Katalysators stattfindet, wozu das Berechnungsmodell den Katalysator (4) in seiner Längsrichtung in eine Tankreihe mit mehreren hintereinanderliegenden Tanks aufteilt, und wobei der Akkumulations-Istwert (V1) und der Akkumulations-Sollwert (V2) die aktuelle beziehungsweise die erforderliche Akkumulation von Ammoniak in einem Tank ($4_{ref}$), hierin als Referenztank bezeichnet, betreffen, der sich eine oder mehrere Stufen stromaufwärts des Tanks ($4_K$) befindet, der dem Auslassende des Katalysators am nächsten liegt, **gekennzeichnet**

- **durch** Berechnen, basierend auf einem gegebenen Schlupfwert ($y_{SL}$), der eine maximal zulässige Konzentration von Ammoniak in den den Katalysator (4) verlassenden Abgasen darstellt, und mittels von Informationen von dem Berechnungsmodell, eines Referenzwerts ($\theta_{L,k}$), der die Gleichgewichtsakkumulation von Ammoniak darstellt, die in dem Tank vorhanden sein muss, um den gegebenen Schlupfwert ($y_{SL}$) zu erreichen, wobei ein solcher Referenzwert ($\theta_{L,k}$) sequenziell für jeden der Tanks, beginnend mit dem Tank ($4_k$), der sich am nächsten an dem Auslassende des Katalysators befindet, und weiter nachfolgend Tank für Tank stromaufwärts bis hin zum Referenztank ($4_{ref}$) berechnet wird, und
- **durch** Verwenden des für den Referenztank ($4_{ref}$) als den Akkumulations-Sollwert (V2) oder als eine maximal zulässige Obergrenze für diesen Akkumulations-Sollwert (V2) bestimmten Referenzwerts ($\theta_{L,ref}$).

2. Verfahren nach Anspruch 1, **dadurch gekennzeichnet**

- **dass** der Akkumulations-Istwert (V1) und der Akkumulations-Sollwert (V2) einem Komparator (12) zugeführt werden, der an einen Regler (13), vorzugsweise in der Form eines PI-Reglers, ein Signal (S1) liefert, welches von der Übereinstimmung zwischen dem Akkumulations-Istwert (V1) und dem Akkumulations-Sollwert (V2) abhängt, und
- **dass** der Regler (13) auf das Signal (S1) von dem Komparator (12) durch Zuliefern eines Steuersignals (v) reagiert, wobei die Einspritzung des Reduktionsmittels in die Abgasleitung gemäß diesem Steuersignal (v) gesteuert wird.

3.  Verfahren nach Anspruch 1 oder 2, **dadurch gekennzeichnet, dass** der sich am nächsten an dem Einlassende des Katalysators befindliche Tank als Referenztank ($4_{ref}$) angenommen wird.

4.  Verfahren nach einem der Ansprüche 1 - 3, **dadurch gekennzeichnet, dass** mindestens die folgenden Eingabewerte in dem Berechnungsmodell beim Erzeugen von Informationen für die Bestimmung des Referenzwertes ($\theta_{L,k}$) verwendet werden:

    - die Abgastemperatur (P1) stromaufwärts des Katalysators,
    - die $NO_x$-Konzentration (P2) in den Abgasen stromaufwärts des Katalysators,
    - der Abgasmassenstrom (P3) durch den Katalysator, und
    - die eingespritzten Mengen (P4) des Reduktionsmittels.

5.  System zum Steuern der Einspritzung eines Reduktionsmittels in der Form von Harnstoff oder Ammoniak stromaufwärts eines SCR-Katalysators in eine Abgasleitung von einem Verbrennungsmotor, wobei das System (10) umfasst:

    - ein elektronisches Berechnungsmittel (11), das dazu ausgebildet ist, ein Berechnungsmodel zu verwenden, um unter Berücksichtigung der erwarteten Reaktionen in dem Katalysator in den vorherrschenden Bedingungen kontinuierlich aktuelle Zustände in dem Katalysator zu bestimmen, wozu das Berechnungsmodell den Katalysator in seiner Längsrichtung in eine Tankreihe mit mehreren hintereinanderliegenden Tanks aufteilt, und das Berechnungsmittel (11) dazu ausgebildet ist, basierend auf Informationen von dem Berechnungsmodell einen Akkumulations-Istwert (V1) und einen Akkumulations-Sollwert (V2) zu bestimmen, die eine aktuelle beziehungsweise eine erforderliche Akkumulation von Ammoniak in dem Katalysator in einem Tank, hierin als Referenztank bezeichnet, darstellen, der sich eine oder mehrere Stufen stromaufwärts des Tanks befindet, der dem Auslassende des Katalysators am nächsten liegt,
    - einen Komparator (12), der dazu ausgebildet ist, den Akkumulations-Istwert (V1) und den Akkumulations-Sollwert (V2) zu vergleichen und ein Signal (S1) zu erzeugen, welches die Übereinstimmung zwischen ihnen darstellt, und
    - einen Regler (13), der dazu ausgebildet, basierend auf dem Signal (S1) von dem Komparator (12) ein Steuersignal (v) zu erzeugen, welches auf die Einspritzung des Reduktionsmittels wirkt,
    **dadurch gekennzeichnet, dass** das Berechnungsmodell (11) ausgebildet ist zum

        - Berechnen, basierend auf einem gegebenen Schlupfwert ($y_{SL}$), der die maximal zulässige Konzentration von Ammoniak in den den Katalysator verlassenden Abgasen darstellt, und mittels Informationen von dem Berechnungsmodell, sequenziell für jeden der Tanks, beginnend mit dem dem Auslass des Katalysators am nächsten liegenden Tank und weiter nachfolgend Tank für Tank stromaufwärts bis hin zum Referenztank, eines Referenzwerts ($\theta_{L,k}$), der die Gleichgewichtsakkumulation von Ammoniak darstellt, die in dem Tank vorhanden sein muss, um den gegebenen Schlupfwert ($y_{SL}$) zu erreichen, und zum

        - Ermöglichen, dass der für den Referenztank bestimmte Referenzwert ($\theta_{L,ref}$) als der Akkumulations-Sollwert (V2) oder eine maximal zulässige Obergrenze für diesen Akkumulations-Sollwert (V2) dient.

6.  System nach Anspruch 5, **dadurch gekennzeichnet, dass** das Berechnungsmittel (11) dazu ausgebildet ist, zu ermöglichen, dass der sich dem Einlassende des Katalysators am nächsten befindliche Tank den Referenztank bildet.

7.  Computerprogrammprodukt, das einen Computerprogrammcode umfasst, um ein System zu bewirken, das zum Steuern der Einspritzung von Reduktionsmittel in der Form von Harnstoff oder Ammoniak stromaufwärts eines Katalysators in einer Abgasleitung von einem Verbrennungsmotor ausgestaltet ist, und das umfasst:

    ■ ein elektronisches Berechnungsmittel, das dazu ausgebildet ist, ein Berechnungsmodel zu verwenden, um unter Berücksichtigung der erwarteten Reaktionen in dem Katalysator in den vorherrschenden Bedingungen kontinuierlich aktuelle Zustände in dem Katalysator zu bestimmen, wozu das Berechnungsmodell den Katalysator in seiner Längsrichtung in eine Tankreihe mit mehreren hintereinanderliegenden Tanks aufteilt, und das Berechnungsmittel dazu ausgebildet ist, basierend auf Informationen von dem Berechnungsmodell einen Akkumulations-Istwert (V1) und einen Akkumulations-Sollwert (V2) zu bestimmen, die eine aktuelle beziehungsweise eine erforderliche Akkumulation von Ammoniak in dem Katalysator in einem Tank, hierin als Referenztank bezeichnet, darstellen, der sich eine oder mehrere Stufen stromaufwärts des Tanks befindet, der dem Auslassende des Katalysators am nächsten liegt,

■ einen Komparator, der dazu ausgebildet ist, den Akkumulations-Istwert (V1) und den Akkumulations-Sollwert (V2) zu vergleichen und ein Signal (S1) zu erzeugen, das die Übereinstimmung zwischen ihnen darstellt, und
■ einen Regler, der dazu ausgebildet ist, basierend auf dem Signal (S1) von dem Komparator ein Steuersignal (v) zu erzeugen, das auf die Einspritzung des Reduktionsmittels wirkt,

um das Berechnungsmodell zu veranlassen, zum

- Berechnen, basierend auf einem gegebenen Schlupfwert ($y_{SL}$), der die maximal zulässige Konzentration von Ammoniak in dem den Katalysator verlassenden Abgas darstellt, und unter Verwendung von Informationen von dem Berechnungsmodell, sequenziell für die jeweiligen Tanks, beginnend mit dem dem Auslass des Katalysators am nächsten befindlichen Tank und weiter nachfolgend Tank für Tank stromaufwärts bis hin zum Referenztank, eines Referenzwerts ($\theta_{L,k}$), der die Gleichgewichtsakkumulation von Ammoniak darstellt, die in dem Tank vorhanden sein muss, um den gegebenen Schlupfwert ($y_{SL}$) zu erreichen, und zum
- Ermöglichen, dass der somit für den Referenztank bestimmte Referenzwert ($\theta_{L,ref}$) als der Akkumulations-Sollwert (V2) oder eine maximal zulässige Obergrenze für diesen Akkumulations-Sollwert (V2) dient.

8. Computerprogrammprodukt nach Anspruch 7, **dadurch gekennzeichnet, dass** das Computerprogrammprodukt ein Datenspeichermedium umfasst, das von einer elektronischen Steuereinheit lesbar ist, wobei der Computerprogrammcode in dem Datenspeichermedium gespeichert ist.

9. Elektronische Steuereinheit für ein Kraftfahrzeug, umfassend ein Ausführungsmittel (21), einen mit dem Ausführungsmittel verbundenen Speicher (23), und ein mit dem Ausführungsmittel verbundenes Datenspeichermedium (24), wobei der Computerprogrammcode eines Computerprogrammprodukts nach Anspruch 7 in dem Datenspeichermedium (24) gespeichert ist.

**Revendications**

1. Procédé pour commander l'injection d'agent réducteur sous forme d'urée ou d'ammoniac en amont d'un catalyseur de réduction catalytique sélective (SCR) (4) dans une ligne d'échappement (2) d'un moteur à combustion (1), de sorte que l'injection de l'agent réducteur dans la ligne d'échappement est commandée en fonction du résultat d'une comparaison entre une valeur réelle d'accumulation (V1) et une valeur de consigne d'accumulation (V2), lesquelles valeur réelle d'accumulation (V1) et valeur de consigne d'accumulation (V2) représentent respectivement les accumulations en cours et requises d'ammoniac dans le catalyseur (4) et sont calculées sur la base d'informations fournies par un modèle de calcul qui, bien que tenant compte des réactions prévues dans le catalyseur dans les conditions de fonctionnement qui prévalent, détermine en continu les états en cours dans le catalyseur, par exemple, l'accumulation d'ammoniac dans différentes parties du catalyseur et la conversion de $NO_x$ qui a lieu dans différentes parties du catalyseur, en vue de quoi le modèle de calcul divise le catalyseur (4) dans sa direction longitudinale en une série de réservoirs avec une pluralité de réservoirs successifs, et la valeur réelle d'accumulation (V1) et la valeur de consigne d'accumulation (V2) se réfèrent respectivement aux accumulations en cours et requises d'ammoniac dans un réservoir ($4_{réf}$), appelé ici réservoir de référence, situé une ou plusieurs étapes en amont du réservoir ($4_K$) qui est le plus proche de l'extrémité de sortie du catalyseur,

<u>caractérisé</u>

- **par** le calcul, sur la base d'une valeur de glissement donnée ($y_{SL}$) qui représente la concentration maximale admissible d'ammoniac dans les gaz d'échappement quittant le catalyseur (4), et au moyen des informations fournies par ledit modèle de calcul, d'une valeur de référence ($\theta_{L,k}$) qui représente l'accumulation à l'équilibre d'ammoniac qui doit être présent dans le réservoir afin d'atteindre la valeur de glissement donnée ($y_{SL}$), une telle valeur de référence ($\theta_{L,k}$) étant calculée séquentiellement pour chacun des réservoirs, en partant du réservoir ($4_K$) le plus proche de l'extrémité de sortie du catalyseur et en procédant ainsi de suite réservoir après réservoir en remontant jusqu'au réservoir de référence ($4_{réf}$), et

- par l'utilisation de la valeur de référence ($\theta_{L,réf}$) déterminée pour le réservoir de référence ($4_{réf}$) en tant que ladite valeur de consigne d'accumulation (V2) ou comme limite supérieure maximale admissible pour cette valeur de consigne d'accumulation (V2).

2. Procédé selon la revendication 1, **caractérisé**

- **en ce que** la valeur réelle d'accumulation (V1) et la valeur de consigne d'accumulation (V2) sont envoyées à un comparateur (12) qui délivre à un régulateur (13), de préférence, sous forme d'un régulateur PI, un signal (S1) qui dépend de la correspondance entre la valeur réelle d'accumulation (V1) et la valeur de consigne d'accumulation (V2), et
- que le régulateur (13) répond au signal (S1) émis par le comparateur (12) en délivrant un signal de commande (v), l'injection de l'agent réducteur dans la ligne d'échappement étant commandée en fonction de ce signal de commande (v).

3. Procédé selon la revendication 1 ou 2, **caractérisé en ce que** le réservoir le plus proche de l'extrémité d'entrée du catalyseur est adopté comme réservoir de référence ($4_{réf}$).

4. Procédé selon l'une quelconque des revendications 1-3, **caractérisé en ce qu'**au moins les valeurs d'entrée suivantes sont utilisées dans le modèle de calcul pour générer des informations pour la détermination de ladite valeur de référence ($\theta_{L,k}$) :

- la température d'échappement (P1) en amont du catalyseur,
- la concentration de $NO_x$ (P2) dans les gaz d'échappement en amont du catalyseur,
- le débit massique des gaz d'échappement (P3) à travers le catalyseur, et
- les quantités injectées (P4) d'agent réducteur.

5. Système pour commander l'injection d'agent réducteur sous forme d'urée ou d'ammoniac en amont d'un catalyseur de SCR dans une ligne d'échappement d'un moteur à combustion, lequel système (10) comprend

- un moyen électronique de calcul (11) adapté à l'utilisation d'un modèle de calcul pour déterminer en continu les états en cours dans le catalyseur tout en tenant compte des réactions prévues dans le catalyseur dans les conditions de fonctionnement qui prévalent, en vue de quoi le modèle de calcul divise le catalyseur dans sa direction longitudinale en une série de réservoirs avec une pluralité de réservoirs successifs, et le moyen de calcul (11) est adapté pour déterminer, sur la base des informations fournies par ledit modèle de calcul, une valeur réelle d'accumulation (V1) et une valeur de consigne d'accumulation (V2) qui représentent respectivement les accumulations en cours et requises d'ammoniac dans le catalyseur dans un réservoir, appelé ici réservoir de référence, situé une ou plusieurs étapes en amont du réservoir qui est le plus proche de l'extrémité de sortie du catalyseur,
- un comparateur (12) adapté pour comparer la valeur réelle d'accumulation (V1) et la valeur de consigne d'accumulation (V2) et pour émettre un signal (S1) qui représente la correspondance entre celles-ci, et
- un régulateur (13) adapté pour générer, sur la base dudit signal (S1) émis par le comparateur (12), un signal de commande (v) qui agit sur l'injection d'agent réducteur,

**caractérisé en ce que** ledit modèle de calcul (11) est adapté pour

- calculer, sur la base d'une valeur de glissement donnée ($y_{SL}$) qui représente la concentration maximale admissible d'ammoniac dans les gaz d'échappement quittant le catalyseur, et au moyen des informations fournies par ledit modèle de calcul, séquentiellement pour chacun des réservoirs, en partant du réservoir le plus proche de la sortie du catalyseur, et en procédant ainsi de suite réservoir après réservoir en remontant jusqu'au réservoir de référence, une valeur de référence ($\theta_{L,k}$) qui représente l'accumulation à l'équilibre d'ammoniac qui doit être présent dans le réservoir pour atteindre la valeur de glissement donnée ($y_{SL}$), et
- permettre à la valeur de référence ($\theta_{L,réf}$) déterminée pour le réservoir de référence de servir en tant que ladite valeur de consigne d'accumulation (V2) ou de limite supérieure maximale admissible pour cette valeur de consigne d'accumulation (V2).

6. Système selon la revendication 5, **caractérisé en ce que** ledit moyen de calcul (11) est adapté pour permettre au réservoir le plus proche de l'extrémité d'entrée du catalyseur de constituer ledit réservoir de référence.

**7.** Produit-programme d'ordinateur comprenant un code de programme informatique permettant à un système, qui est configuré pour commander l'injection d'agent réducteur sous forme d'urée ou d'ammoniac en amont d'un catalyseur dans une ligne d'échappement d'un moteur à combustion, et qui comprend

■ un moyen électronique de calcul adapté à l'utilisation d'un modèle de calcul pour déterminer en continu les états en cours dans le catalyseur tout en tenant compte des réactions prévues dans le catalyseur dans les conditions de fonctionnement qui prévalent, en vue de quoi le modèle de calcul divise le catalyseur dans sa direction longitudinale en une série de réservoirs avec une pluralité de réservoirs successifs, et le moyen de calcul est adapté pour déterminer, sur la base des informations fournies par ledit modèle de calcul, une valeur réelle d'accumulation (V1) et une valeur de consigne d'accumulation (V2) qui représentent respectivement les accumulations en cours et requises d'ammoniac dans le catalyseur dans un réservoir, appelé ici réservoir de référence, situé une ou plusieurs étapes en amont du réservoir qui est le plus proche de l'extrémité de sortie du catalyseur,

■ un comparateur adapté pour comparer la valeur réelle d'accumulation (V1) et la valeur de consigne d'accumulation (V2) et pour émettre un signal (S1) qui représente la correspondance entre celles-ci, et

■ un régulateur adapté pour générer, sur la base dudit signal (S1) émis par le comparateur, un signal de commande (v) qui agit sur l'injection d'agent réducteur,

d'amener ledit modèle de calcul à

- calculer, sur la base d'une valeur de glissement donnée ($y_{SL}$) qui représente la concentration maximale admissible d'ammoniac dans les gaz d'échappement quittant le catalyseur, et au moyen des informations fournies par ledit modèle de calcul, séquentiellement pour les réservoirs respectifs, en partant du réservoir le plus proche de la sortie du catalyseur, et en procédant ainsi de suite réservoir après réservoir en remontant jusqu'au réservoir de référence, une valeur de référence ($\theta_{L,k}$) qui représente l'accumulation à l'équilibre d'ammoniac qui doit être présent dans le réservoir pour atteindre la valeur de glissement donnée ($y_{SL}$), et
- permettre à la valeur de référence ($\theta_{L,réf}$) ainsi déterminée pour le réservoir de référence de servir en tant que ladite valeur de consigne d'accumulation (V2) ou de limite supérieure maximale admissible pour cette valeur de consigne d'accumulation (V2).

**8.** Produit-programme d'ordinateur selon la revendication 7, **caractérisé en ce que** le produit-programme d'ordinateur comprend un support de stockage de données qui est lisible par une unité de commande électronique, ledit code de programme informatique étant stocké sur le support de stockage de données.

**9.** Unité de commande électronique pour un véhicule automobile, comprenant un moyen d'exécution (21), une mémoire (23) connectée au moyen d'exécution et un support de stockage de données (24) connecté au moyen d'exécution, le code de programme informatique d'un produit-programme d'ordinateur selon la revendication 7 étant stocké sur ledit support de stockage de données (24).

Fig 1

Fig 2

Fig 3

**EP 2 435 674 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1706607 A1